# EUROPEAN PATENT SPECIFICATION

(11) **EP 3 990 812 B1**
(45) Date of publication and mention of the grant of the patent: **26.02.2025**
(21) Application number: 20832916.9
(22) Date of filing: 26.06.2020
(51) Int. Cl.: F16K 31/08, F16K 1/14

(54) **MAGNETIC VALVE**
MAGNETVENTIL
VANNE MAGNÉTIQUE

(30) Priority: 28.06.2019 US 201962868201 P
(43) Date of publication of application: 04.05.2022
(73) Proprietor: LEGGETT & PLATT CANADA CO., Halifax NS B3J 2X2 (CA)
(72) Inventor: O'MOORE, Wade, Belle River, Ontario N0R 1A0 (CA); ZHANG, Jianlin, Windsor, Ontario N9E 4K3 (CA); LIANG, Xinde, Windsor, Ontario N9B 3X3 (CA); WATSON, Guilherme, LaSalle, Ontario N9J 3L1 (CA); BLENDEA, Horia, LaSalle, Ontario N9J 3P7 (CA)
(74) Representative: Kraus & Lederer PartGmbB
(86) International application number: PCT/CA2020/000077
(87) International publication number: WO 2020/257912

(56) References cited:
- EP-A2- 0 333 452
- WO-A1-2004/104462
- CN-A- 101 922 578
- CN-Y- 2 526 615
- DE-A1- 4 117 958
- DE-B4- 102012 011 975
- US-A- 3 203 447
- US-A- 3 203 447
- US-A- 4 630 799
- US-A1- 2005 139 610
- US-B1- 9 797 521

## Description

### CROSS-REFERENCE TO RELATED APPLICATIONS

This application claims priority to co-pending U.S. Provisional Patent Application No. 62/868,201, filed on June 2019.

### BACKGROUND

The present disclosure relates to valves, and more particularly to magnetically actuated valves. A magnetically actuated valve is disclosed in the document CN101922578B.

### SUMMARY

The invention is defined by a pneumatic valve in accordance with claim 1. The present disclosure provides, in one aspect, a pneumatic valve including a housing with a first port, a second port, and a third port, and a first valve element including a first magnet. The first valve element is movable between an open position and a closed position, and the first valve element is configured to seal the first port in the closed position. The pneumatic valve further includes a second valve element including a second magnet. The second valve element is movable between an open position and a closed position, and the second valve element is configured to seal the third port in the closed position. The pneumatic valve also includes a magnetic actuating element rotatable between a first position and a second position. The first valve element and the second valve element are movable between the open position and the closed position in response to rotation of the magnetic actuating element between the first position and the second position.

The present disclosure provides, in another aspect, a pneumatic valve including a housing with a port and a valve element with a magnet. The valve element is movable between an open position in which the valve element is spaced from the port and a closed position in which the valve element seals the port. The pneumatic valve also includes a magnetic actuating element rotatable between a first position and a second position. The valve element is movable from the closed position toward the open position in response to rotation of the magnetic actuating element from the first position to the second position.

The present disclosure provides, in another aspect, a pneumatic valve including a housing with a port and a valve element with a magnet. The valve element is movable between an open position in which the valve element is spaced from the port and a closed position in which the valve element seals the port. The pneumatic valve also includes a magnetic actuating element movable between a first position and a second position. The magnetic actuating element is configured to repel the valve element when the magnetic actuating element is in the first position, and the magnetic actuating element is configured to attract the valve element when the magnetic actuating element is in the second position.

Other features and aspects of the disclosure will become apparent by consideration of the following detailed description and accompanying drawings.

### BRIEF DESCRIPTION OF THE DRAWINGS

FIG. 1 is a perspective view of a valve in accordance with an embodiment of the disclosure.
FIG. 2 is a cross-sectional view of the valve of FIG. 1 with an actuating assembly of the valve illustrated in an inflating position.
FIG. 3 is a cross-sectional view of the valve of FIG. 1 with the actuating assembly illustrated in a deflating position.
FIG. 4 is a perspective view of a valve in accordance with another embodiment of the disclosure.

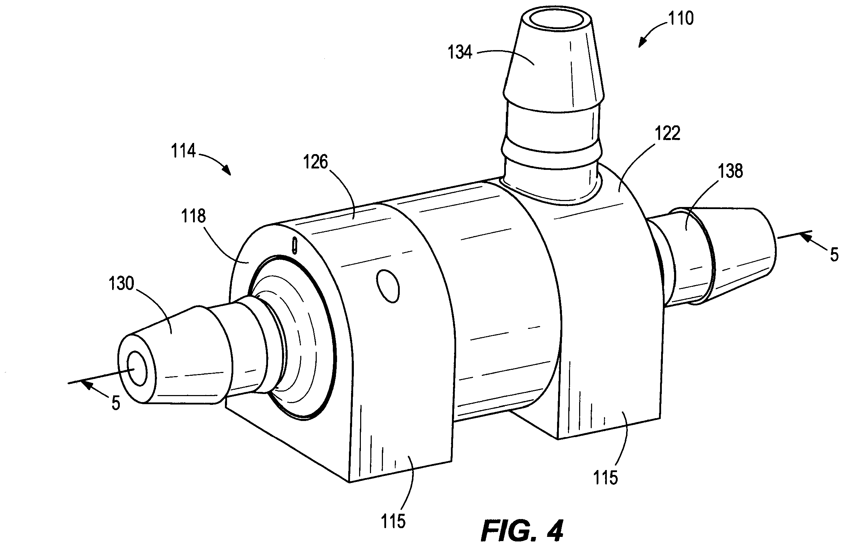

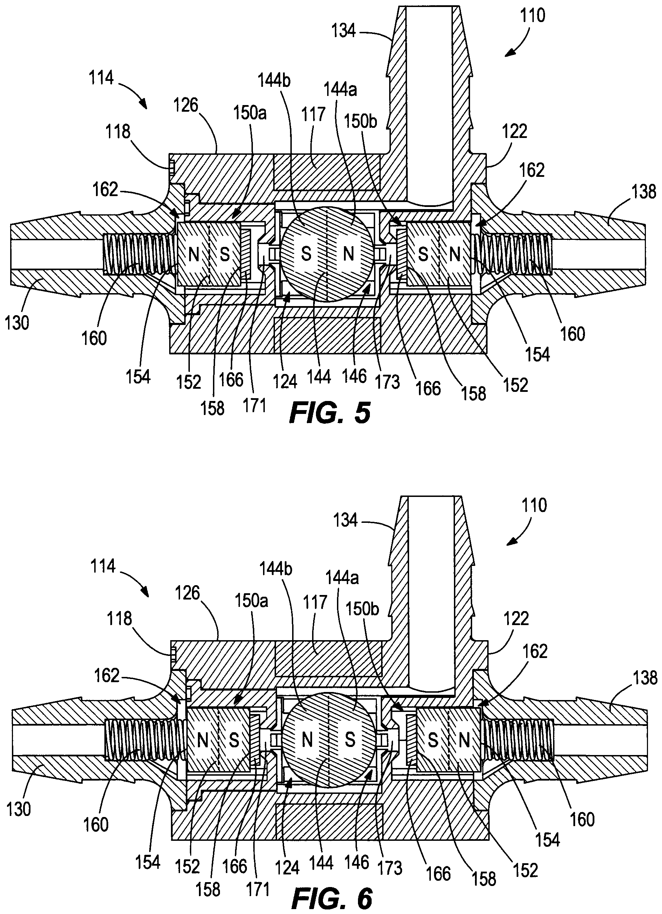

FIGS. 4-7 relate to embodiments not encompassed by the wording of the claims but useful for understanding the invention. In particular, FIG. 5 is a cross-sectional view of the valve of FIG. 4 with an actuating assembly of the valve illustrated in an inflating position.
FIG. 6 is a cross-sectional view of the valve of FIG. 4 with the actuating assembly illustrated in a deflating position.

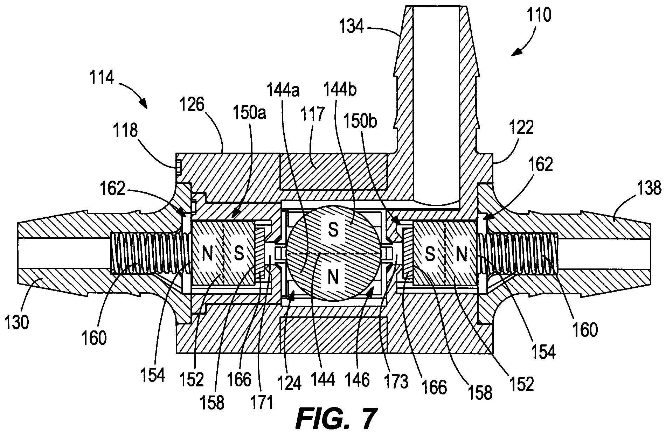

FIG. 7 is a cross-sectional view of the valve of FIG. 4 with the actuating assembly illustrated in a blocking position.

Before any embodiments of the disclosure are explained in detail, it is to be understood that the disclosure is not limited in its application to the details of construction and the arrangement of components set forth in the following description or illustrated in the following drawings. The disclosure is capable of supporting other embodiments and of being practiced or of being carried out in various ways. Also, it is to be understood that the phraseology and terminology used herein is for the purpose of description and should not be regarded as limiting. The scope of the invention is defined by the claims. In the following description 1 inch corresponds to 2.54 cm.

### DETAILED DESCRIPTION

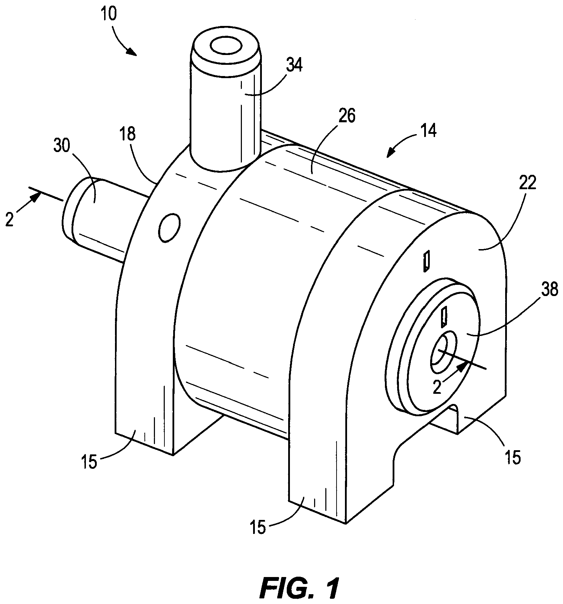

FIGS. 1-3 illustrate a valve 10 according to one embodiment of the present disclosure. The illustrated valve 10 includes a generally cylindrical housing 14 with a first end wall 18, a second end wall 22, and a side wall 26 extending between the end walls 18, 22 (FIG. 1). A plurality of legs 15 extends from the side wall 26, which may facilitate mounting the valve 10 in various ways. In other embodiments, the housing 14 may have other shapes and mounting configurations.

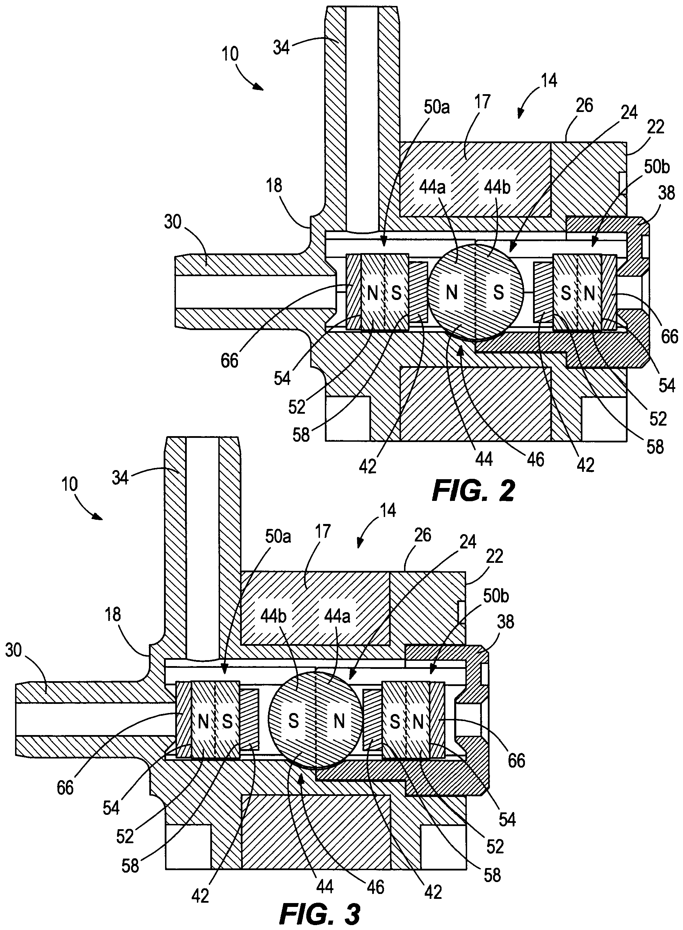

Referring to FIGS. 2 and 3, the walls 18, 22, 26 collectively define a cavity 24 within the housing 14. An electrically conductive coil 17 is coupled to the side wall 26 (e.g., in a recess formed in the side wall 26), such that the coil 17 is concentrically aligned with the cavity 24. The coil 17 may be made of copper, silver, gold, or any other suitable electrically conductive material. A power source (not shown) is electrically coupled to the coil 17 so that the power source and the coil 17 form a circuit in which the power source is able to drive current through the coil 17. In the illustrated embodiment, the power source is capable of selectively driving current through the coil 17 in a first (e.g., positive) direction and a second (e.g., negative) direction. In some embodiments, the direction of current flow through the coil 17 may be selectively varied using a positive to negative converter, by selectively electrically coupling two different power sources to the coil 17, or by any other suitable means.

The illustrated valve 10 includes three ports: a first port or pressure port 30, a second port or bladder port 34, and a third port or vent port 38. The pressure port 30 may be fluidly coupled to a source of pressurized fluid (e.g., an air pump or compressor, not shown). The bladder port 34 may be fluidly coupled to a vessel for containing pressurized fluid (e.g., an inflatable bladder; not shown) or to a downstream valve assembly or fluidic switching module configured to route the pressurized air to one or more such vessels. The vent port 38 is in fluid communication with the environment surrounding the valve 10. In the illustrated embodiment, the pressure port 30 extends from the first end wall 18, the vent port 38 extends from the second end wall 22, and the bladder port 34 extends from the side wall 26. In some embodiments, the ports 30, 34, 38 may extend from different portions of the housing 14, or the ports 30, 34, 38 may be recessed into the housing 14. In some embodiments, the ports 30, 34, 38 may be configured differently (e.g., the first port 30 may be the vent port, and the third port 38 may be the pressure port, etc.).

With continued reference to FIGS. 2 and 3, an actuator assembly 46 is contained within the cavity 24 of the housing 14. The illustrated actuator assembly 46 includes a first valve element 50a, a second valve element 50b, and an actuating element 44. Each of the valve elements 50a, 50b includes a permanent magnet 52 having a first end 54 and a second end 58 opposite the first end 54. The first ends 54 of the magnets 52 face away from the actuating element 44, and the second ends 58 of the magnets 52 face toward the actuating element 44 in the illustrated embodiment. The first end 54 has a first magnetic polarity (e.g., north), and the second end 58 has a second, opposite magnetic polarity (e.g., south). In the illustrated embodiment, the permanent magnets 52 are rare earth magnets made of NdFeB or any other suitable magnetic material. The magnets 52 are nickel plated, axially magnetized, and cylindrical in shape, with a diameter of about 1/10-inch and a thickness of about 1/16-inch. In other embodiments, the magnets 52 may be made with different magnetic materials and formed in different shapes or dimensions.

Each of the valve elements 50a, 50b further includes a seal 66 coupled to the first end 54 of the magnet 52 and a spacer 42 coupled to the second end 58. The seal 66 of the first valve element 50a is configured to selectively engage and seal the pressure port 30. The seal 66 of the second valve element 50b is configured to selectively engage and seal the vent port 38. The spacers 42 are made of a material with a low coefficient of friction, such as Teflon^{®} or Delrin^{®}, and are positioned between the magnets 52 and the actuating element 44. In the illustrated embodiment, the spacers 42 are about 0.025 inches thick; however, the spacers 42 may have other thicknesses.

With continued reference to FIGS. 2 and 3, the actuating element 44 is located in the cavity 24 between the first and second valve elements 50a, 50b and surrounded by the coil 17. In the illustrated embodiment, the actuating element 44 is a spherical permanent magnet (e.g., a rare earth magnet such as NeFeB) that is nickel plated and axially magnetized. The actuating element 44 has a diameter of 1/8 inch in the illustrated embodiment, but the actuating element 44 may be made from different magnetic materials and formed in different shapes or dimensions in other embodiments. For example, in some embodiments, the actuating element 44 may be shaped as a cylinder. The actuating element 44 includes a first magnetic pole 44a (e.g., a north pole) and a second magnetic pole 44b (e.g., a south pole) opposite the first magnetic pole 44a. In the illustrated embodiment, the first magnetic pole 44a has the same magnetic polarity as the first ends 54 of the magnets 52, and the second magnetic pole 44b has the same magnetic polarity as the second ends 58 of the magnets 52.

The actuating element 44 is rotatable between a first orientation (FIG. 2) and a second orientation (FIG. 3) in response to the power supply driving current through the coil 17 in the first direction and the second direction, respectively. In response to rotation of the actuating element 44 between the first orientation and the second orientation, the first valve element 50a is movable between a closed position (FIG. 3), in which the seal 66 of the first valve element 50a engages and seals the pressure port 30, and an open position (FIG. 2), in which the seal 66 of the first valve element 50a is spaced from the pressure port 30 to allow fluid to flow through the pressure port 30. Likewise, the second valve element 50b is movable between a closed position (FIG. 2) in which the seal 66 of the second valve element 50b engages and seals the vent port 38 and an open position (FIG. 3) in which the seal 66 of the second valve element 50b is spaced from the vent port 38 to allow fluid to flow through the vent port 38. The valve elements 50a, 50b are movable between their respective open and closed positions under the influence of magnetic attraction and repulsion in response to rotation of the actuating element 44.

In operation, to inflate the vessel coupled to the bladder port 34, the power supply is energized to drive current through the coil 17 in the first direction, moving the actuating element 44 to the first orientation illustrated in FIG. 2. In particular, the current traveling through the coil 17 produces a magnetic field that acts on the actuating element 44 to orient the first magnetic pole 44a toward the first valve element 50a and the second magnetic pole 44b toward the second valve element 50b. The attractive magnetic force between the second end 58 of the magnet 52 in the first valve element 50a and the first magnetic pole 44a of the actuating element 44 draws the first valve element 50a toward the actuating element 44, unsealing the pressure port 30. In the illustrated embodiment, the first valve element 50a is displaced to the open position in which the spacer 42 engages the actuating element 44, and the seal 66 is spaced from the pressure port 30. Simultaneously, the magnetic repulsive force between the second end 58 of the magnet 52 in the second valve element 50b and the second magnetic pole 44b of the actuating element 44 pushes the second valve element 50b to its closed position so that the seal 66 engages and seals the vent port 38.

Thus, in the inflating configuration of the valve 10 illustrated in FIG. 2, the pressure port 30 is open to the chamber 24 and the bladder port 34, while the vent port 38 is sealed. Pressurized air may enter the cavity 24 through the pressure port 30 and then flow to the vessel through the bladder port 34 to inflate the vessel.

To deflate the vessel, the power supply reverses the direction of current in the coil 17. By driving current through the coil 17 in the second, opposite direction, the actuating element 44 rotates to the second orientation illustrated in FIG. 3. In particular, the current traveling through the coil 17 produces a magnetic field that acts on the actuating element 44 to orient the first magnetic pole 44a toward the second valve element 50b and the second magnetic pole 44b toward the first valve element 50a. The attractive magnetic force between the second end 58 of the magnet 52 in the second valve element 50b and the first magnetic pole 44a of the actuating element 44 draws the second valve element 50b toward the actuating element 44, unsealing the vent port 38. In the illustrated embodiment, the second valve element 50a is displaced to the open position in which the spacer 42 engages the actuating element 44, and the seal 66 is spaced from the vent port 38. Simultaneously, the magnetic repulsive force between the second end 58 of the magnet 52 in the first valve element 50a and the second magnetic pole 44b of the actuating element 44 pushes the first valve element 50a to its closed position so that the seal 66 engages and seals the pressure port 30.

Thus, in the deflating configuration of the valve 10 illustrated in FIG. 3, the vent port 38 is open to the chamber 24 and the bladder port 34, while the pressure port 30 is sealed. Pressurized air contained within the vessel may enter the cavity 24 through the bladder port 34 and then be vented to the surrounding atmosphere through the vent port 38.

Because the illustrated actuating element 44 rotates to actuate the valve 10 between the inflating configuration (FIG. 2) and the deflating configuration (FIG. 3), a smaller force is required to separate the magnetic poles 44a, 44b from the respective magnets 52. Specifically, as the actuating element 44 rotates, the actuating element 44 and the magnets 52 separate in a shearing motion, which requires less force (e.g., only about 25% of the force in some embodiments) than separating magnets axially (i.e. pulling magnets apart in a direction opposite the magnetic attraction force). Because the actuating element 44 is more easily disengaged from the valve elements 50a, 50b, the power source does not need to drive as much current through the coil 17 to reorient the actuating element 44. Additionally, in the illustrated embodiment, the low-friction spacers 42 allow the actuating element 44 to easily rotate, even when one of the valve elements 50a, 50b is in contact with the actuating element 44. The thickness of each spacer 42 is selected to provide a desired amount of magnetic force developed between the actuating element 44 and the magnets 52.

The illustrated valve 10 has the advantage that the actuating element 44 drives the displacement of the valve elements 50a, 50b to both the closed and open positions. No extra components are required within the actuator assembly 46 to bias the valve elements 50a, 50b to either the closed or open positions. With fewer parts, the magnetically controlled valve 10 can be made more compact than typical valves and may require less maintenance.

FIGS. 4-7 illustrate a valve 110 according to another embodiment. The valve 110 is similar in some aspects to the valve 10 described above with reference to FIGS. 1-3. Accordingly, features and elements of the valve 110 corresponding with features and elements of the valve 10 are given corresponding reference numbers, plus 100.

The valve 110 includes a housing 114. The housing 114 is generally cylindrical and has a first end wall 118, a second end wall 122, and a side wall 126 extending between the end walls 118, 122 (FIG. 4). A plurality of legs 115 extends from the side wall 126, which may facilitate mounting the valve 110 in various ways. In other embodiments, the housing 114 may have other shapes and mounting configurations.

Referring to FIGS. 5-7, the walls 118, 122, 126 collectively define a cavity 124 within the housing 114. An electrically conductive coil 117 is coupled to the side wall 126 (e.g., in a recess formed in the side wall 126), such that the coil 117 is concentrically aligned with the cavity 124. A power source (not shown) is electrically coupled to the coil 117 so that the power source and the coil 117 form a circuit in which the power source is able to drive current through the coil 117. In the illustrated embodiment, the power source is capable of selectively driving current through the coil 117 in a first (e.g., positive) direction and a second (e.g., negative) direction. In some embodiments, the direction of current flow through the coil 117 may be selectively varied using a positive to negative converter, by selectively electrically coupling two different power sources to the coil 117, or by any other suitable means. In some embodiments, the power source may include a pulse-width modulation (PWM) controller able to selectively vary a duty cycle of current driven in the first direction to current driven in the second direction at high frequency.

The illustrated valve 110 includes three ports: a first port or pressure port 130, a second port or bladder port 134, and a third port or vent port 138. In the illustrated embodiment, the pressure port 130 extends from the first end wall 118, the vent port 138 extends from the second end wall 122, and the bladder port 134 extends from the side wall 126. In some embodiments, the ports 130, 134, 138 may extend from different portions of the housing 114, or the ports 130, 134, 138 may be recessed into the housing 114. In some embodiments, the ports 130, 134, 138 may be configured differently (e.g., the first port 130 may be the vent port, and the third port 138 may be the pressure port, etc.).

With reference to FIGS. 5-7, an actuator assembly 146 is contained within the cavity 124 of the housing 114. The actuator assembly 146 includes a first valve element 150a, a second valve element 150b, and an actuating element 144. In the illustrated embodiment, the pressure port 130 and the vent port 138 each include a chamber 162 extending into the cavity 124. The chamber 162 of the pressure port 130 includes an interior pressure port opening 171, and the chamber 162 of the vent port 138 includes an interior vent port opening 173.

The first valve element 150a is disposed within the chamber 162 of the pressure port 130, and the second valve element 150b is disposed within the chamber 162 of the vent port 138. Each of the valve elements 150a, 150b includes a permanent magnet 152 having a first end 154 and a second end 158 opposite the first end 154. The first ends 154 of the magnets 152 face away from the actuating element 144, and the second ends 158 of the magnets 152 face toward the actuating element 144. The first end 154 has a first magnetic polarity (e.g. north), and a second end 158 has a second, opposite magnetic polarity (e.g. south). In the illustrated embodiment, the permanent magnets 152 are rare earth magnets made of NdFeB or any other suitable magnetic material. The magnets 152 are nickel plated, axially magnetized, and cylindrical in shape, with a diameter of about 1/8-inch and a thickness of about 1/8-inch. In other embodiments, the magnets 152 may be made with different magnetic materials and formed in different shapes or dimensions.

Each of the valve elements 150a, 150b further includes a seal 166 coupled to the second end 158 of the magnet 152. Biasing elements 160, which are coil springs in the illustrated embodiment, engage the first ends 154 of the magnets 152 to bias the valve elements 150a, 150b toward the actuating element 144. In the illustrated embodiment, the biasing elements 160 are accommodated within the pressure port 130 and the vent port 138, respectively.

With continued reference to FIGS. 5-7, the actuating element 144 is located within the cavity 124 between the chambers 162 and is surrounded by the coil 117. In the illustrated embodiment, the actuating element 144 is a spherical permanent magnet (e.g., a rare earth magnet such as NeFeB) that is nickel plated and axially magnetized. The actuating element 144 has a diameter of 3/16 inch in the illustrated embodiment, but the actuating element 144 may be made from different magnetic materials and formed in different shapes or dimensions in other embodiments. For example, in some embodiments, the actuating element 144 may be shaped as a cylinder. The actuating element 144 includes a first magnetic pole 144a (e.g., a north pole) and a second magnetic pole 144b (e.g., a south pole) opposite the first magnetic pole 144a. In the illustrated embodiment, the first magnetic pole 144a has the same magnetic polarity as the first ends 154 of the magnets 152, and the second magnetic pole 144b has the same magnetic polarity as the second ends 158 of the magnets 152.

The actuating element 144 is rotatable between a first orientation (FIG. 5) and a second orientation (FIG. 6) in response to the power supply driving current through the coil 117 in the first direction and the second direction, respectively. In the illustrated embodiment, the actuating element 144 is also rotatable to a third orientation (FIG. 7) between the first orientation and the second orientation in response to the power supply switching between driving current in the first direction and the second direction at a high frequency (e.g., via PWM control).

The first valve element 150a is movable between a closed position (FIGS. 6 and 7), in which the seal 166 of the first valve element 150a engages and seals the pressure port opening 171, and an open position (FIG. 5) in which the seal 166 of the first valve element 150a is spaced from the pressure port opening 171 to allow fluid to flow through the pressure port 130. Likewise, the second valve element 150b is moveable between a closed position (FIGS. 5 and 7) in which the seal 166 of the second valve element 150b engages and seals the vent port opening 173 and an open position (FIG. 6) in which the seal 166 of the second valve element 150b is spaced from the vent port opening 173 to allow fluid to flow through the vent port 138. The valve elements 150a, 150b are movable between their respective open and closed positions under the influence of magnetic attraction and repulsion in response to rotation of the actuating element 144, and under the influence of the biasing elements 160.

In operation, to inflate the vessel coupled to the bladder port 134, the power supply is energized to drive current through the coil 117 in the first direction, moving the actuating element 144 to the first orientation illustrated in FIG. 5. In particular, the current traveling through the coil 117 produces a magnetic field that acts on the actuating element 144 to orient the second magnetic pole 144b toward the first valve element 150a and the first magnetic pole 144a toward the second valve element 150b. The magnetic repulsive force between the second end 158 of the magnet 152 of the first valve element 150a and the second magnetic pole 144b of the actuating element 144 pushes the first valve element 150a to its open position against the force of the biasing element 160. In its open position, the seal 166 of the first valve element 150a is spaced from the pressure port opening 171. Simultaneously, the attractive magnetic force between the second end 158 of the magnet 152 of the second valve element 150b and the first magnetic pole 144a of the actuating element 144 combines with the force of the biasing element 160 to hold the second valve element 150b in its closed position with the seal 166 engaged against the vent port opening 173.

Thus, in the inflating configuration of the valve 110 illustrated in FIG. 5, the pressure port 130 is open to the chamber 124 and the bladder port 134, while the vent port 138 is sealed at the vent port opening 173. Pressurized air may enter the cavity 124 through the pressure port 130 and then flow to the vessel through the bladder port 134 to inflate the vessel.

To deflate the vessel, the power supply reverses the direction of current in the coil 117. By driving current through the coil 117 in the second, opposite direction, the actuating element 144 rotates to the second orientation illustrated in FIG. 6. In particular, the current traveling through the coil 117 produces a magnetic field that acts on the actuating element 144 to orient the second magnetic pole 144b toward the second valve element 150b and the first magnetic pole 144a toward the first valve element 150a. The magnetic repulsive force between the second end 158 of the magnet 152 of the second valve element 150b and the second magnetic pole 144b of the actuating element 144 pushes the second valve element 150b to its open position against the force of the biasing element 160. In its open position, the seal 166 of the second valve element 150b is spaced from the vent port opening 173. Simultaneously, the attractive magnetic force between the second end 158 of the magnet 152 of the first valve element 150a and the first magnetic pole 144a combines with the force of the biasing element 160 to hold the first valve element 150a in its closed position with the seal 166 engaged against the pressure port opening 171.

Thus, in the deflating configuration of the valve 110 illustrated in FIG. 6, the vent port 138 is open to the chamber 124 and the bladder port 134, while the pressure port 130 is sealed at the pressure port opening 171. Pressurized air contained within the vessel may enter the cavity 124 through the bladder port 134 and then be vented to the surrounding atmosphere through the vent port 138.

In some embodiments, the valve 110 may also be actuated to a closed or neutral configuration illustrated in FIG. 7. As such, the valve 110 may be configured as a three port-three position valve (i.e. 3/3 valve) instead of a three port-two position valve (i.e. a 3/2 valve) like the valve 10 described above with reference to FIGS. 1-3. In such embodiments, the actuating element 144 is rotatable to the third orientation, illustrated in FIG. 7, in response to the power supply switching between driving current in the first direction and the second direction at a high frequency (e.g., via PWM control). In the illustrated embodiment, the third orientation is midway between the first orientation and the second orientation.

When the valve 110 is in the neutral configuration, the first and second poles 144a, 144b of the actuating element 144 are oriented along a line transverse to a line passing through the magnets 152. As such, the actuating element 144 does not exert a repulsive magnetic force on either of the valve element 150a, 150b sufficient to overcome the force of the biasing elements 160. Thus, both of the valve element 150a, 150b remain closed to seal both the pressure port opening 171 and the vent port opening 173. In the neutral configuration, the source of pressurized fluid (not shown) does not have to continuously provide pressurized air through the pressure port 130 to the vessel coupled to the bladder port 134 to keep the vessel pressurized.

In some embodiments, the valves 10, 110 may be incorporated into an automotive seating assembly to control inflation and deflation of lumbar support bladders. In some embodiments, the valves 10, 110 may be incorporated into a pneumatic massage system. It should be understood, however, that the valves 10, 110 may be used in a wide range of different applications in which compact valves with relatively low energy requirements are desirable.

Although the disclosure has been described in detail with reference to certain preferred embodiments, variations and modifications exist as long as they fall within the scope of the claims.

## Claims

1. A pneumatic valve (10) comprising:
a housing (14) including a first port (30), a second port (34), and a third port (38), wherein each of the first port (30), second port (34) and third port (38) is in fluid communication with a chamber (24) located within the housing (14);
a first valve element (50a) located within the chamber (24) and including a first magnet (52), wherein the first valve element (50a) is movable between an open position and a closed position, and the first valve element (50a) is configured to seal the first port (30) in the closed position;
a second valve element (50b) located within the chamber (24) and including a second magnet (52), wherein the second valve element (50b) is movable between an open position and a closed position, and the second valve element (50b) is configured to seal the third port (38) in the closed position; and
a magnetic actuating element (44) located within the chamber (24) between the first valve element (50a) and the second valve element (50b) and rotatable between a first position and a second position,
wherein the first valve element (50a) and the second valve element (50b) are movable between the open position and the closed position in response to rotation of the magnetic actuating element (44) between the first position and the second position,
wherein the magnetic actuating element (44) is configured to attract the first valve element (50a) toward the open position and to repel the second valve element (50b) toward the closed position in the first position of the magnetic actuating element (44), and
the magnetic actuating element (44) is configured to repel the first valve element (50a) toward the closed position and to attract the second valve element (50b) toward the open position in the second position of the magnetic actuating element (44) such that when the first valve element (50a) is in the open position, the second valve element (50b) is maintained in the closed position, and, when the second valve element (50b) is in the open position, the first valve element (50a) is maintained in the closed position.

2. The pneumatic valve (10) of claim 1, further comprising a coil (17) coupled to the housing (14), wherein the magnetic actuating element (44) is configured to rotate to the first position in response to current being driven through the coil (17) in a first direction, and wherein the magnetic actuating element (44) is configured to rotate to the second position in response to current being driven through the coil (17) in a second direction opposite the first direction.

3. The pneumatic valve (10) of any one of the preceding claims, wherein the magnetic actuating element (44) is spherical or cylindrical.

4. The pneumatic valve (10) of any one of the preceding claims, wherein the first position is offset 180 degrees from the second position.

5. The pneumatic valve (10) of any one of the preceding claims, wherein the first valve element (50a) includes a spacer (42) positioned between the first magnet (52) and the magnetic actuating element (44) and the second valve element (50b) includes a spacer (42) positioned between the second magnet (52) and the magnetic actuating element (44).

6. The pneumatic valve (10) of any of the preceding claims, wherein a first end (54) of each of the first and second magnets (52) faces away from the actuating element (44) and has a first magnetic polarity and a second end (58) of each of the first and second magnets (52) faces toward the actuating element (44) and has a second magnetic polarity opposite the first magnetic polarity.

7. The pneumatic valve (10) of claim 6, wherein the first magnetic polarity is north and the second magnetic polarity is south.

8. The pneumatic valve (10) of claim 6 or 7, wherein a first magnetic pole of the actuating element (44) has the same magnetic polarity as the first end of each of the first and second magnets (52) and a second magnetic pole of the actuating element (44) has the same magnetic polarity as the second end of each of the first and second magnets (52).

9. The pneumatic valve (10) of any of the preceding claims, wherein the first port (30) and the third port (38) are coaxial.

10. The pneumatic valve (10) of any of the preceding claims, wherein the first port (30) extends from a first end wall (18) of the housing (14) and the third port (38) extends from a second end wall (22) of the housing (14).

11. The pneumatic valve (10) of any of the preceding claims, wherein the second port (34) extends from a side wall (26) of the housing (14).

12. The pneumatic valve (10) of any of the preceding claims, wherein the first port (30) is a pressure port fluidly coupled to a source of pressurized fluid and the third port (38) is a vent port that is in fluid communication with an environment surrounding the housing (14).

13. The pneumatic valve (10) of any of the preceding claims, wherein the second port (34) is configured to be fluidly coupled to a vessel for containing pressurized fluid.

14. The pneumatic valve (10) of any of the preceding claims, wherein the actuating element (44) is configured such that as the actuating element (44) rotates between the first position and the second position, the actuating element (44) separates from the first and second magnets (52) in a shearing motion.

## Patentansprüche

1. Pneumatisches Ventil (10), das Folgendes umfasst:
ein Gehäuse (14) mit einer ersten Öffnung (30), einer zweiten Öffnung (34) und einer dritten Öffnung (38), wobei die erste Öffnung (30), die zweite Öffnung (34) und die dritte Öffnung (38) jeweils in Fluidkommunikation mit einer innerhalb des Gehäuses (14) angeordneten Kammer (24) stehen;
ein erstes Ventilelement (50a), das innerhalb der Kammer (24) angeordnet ist und einen ersten Magneten (52) einschließt, wobei das erste Ventilelement (50a) zwischen einer offenen Position und einer geschlossenen Position bewegbar ist und das erste Ventilelement (50a) so konfiguriert ist, dass es die erste Öffnung (30) in der geschlossenen Position abdichtet;
ein zweites Ventilelement (50b), das innerhalb der Kammer (24) angeordnet ist und einen zweiten Magneten (52) einschließt, wobei das zweite Ventilelement (50b) zwischen einer offenen Position und einer geschlossenen Position bewegbar ist und das zweite Ventilelement (50b) so konfiguriert ist, dass es die dritte Öffnung (38) in der geschlossenen Position abdichtet; und
ein magnetisches Betätigungselement (44), das innerhalb der Kammer (24) zwischen dem ersten Ventilelement (50a) und dem zweiten Ventilelement (50b) angeordnet ist und zwischen einer ersten Position und einer zweiten Position drehbar ist,
wobei das erste Ventilelement (50a) und das zweite Ventilelement (50b) als Reaktion auf die Drehung des magnetischen Betätigungselements (44) zwischen der ersten Position und der zweiten Position zwischen der offenen Position und der geschlossenen Position bewegbar sind,
wobei
das magnetische Betätigungselement (44) so konfiguriert ist, dass es das erste Ventilelement (50a) in Richtung der offenen Position anzieht und das zweite Ventilelement (50b) in Richtung der geschlossenen Position in der ersten Position des magnetischen Betätigungselements (44) abstößt, und
das magnetische Betätigungselement (44) so konfiguriert ist, dass es das erste Ventilelement (50a) in Richtung der geschlossenen Position abstößt und das zweite Ventilelement (50b) in Richtung der offenen Position in der zweiten Position des magnetischen Betätigungselements (44) anzieht, sodass, wenn sich das erste Ventilelement (50a) in der offenen Position befindet, das zweite Ventilelement (50b) in der geschlossenen Position gehalten wird, und, wenn sich das zweite Ventilelement (50b) in der offenen Position befindet, das erste Ventilelement (50a) in der geschlossenen Position gehalten wird.

2. Pneumatisches Ventil (10) nach Anspruch 1, das ferner eine mit dem Gehäuse (14) gekoppelte Spule (17) umfasst, wobei das magnetische Betätigungselement (44) so konfiguriert ist, dass es sich als Reaktion auf Strom, der in einer ersten Richtung durch die Spule (17) getrieben wird, in die erste Position dreht, und wobei das magnetische Betätigungselement (44) so konfiguriert ist, dass es sich als Reaktion auf Strom, der in einer der ersten Richtung entgegengesetzten zweiten Richtung durch die Spule (17) getrieben wird, in die zweite Position dreht.

3. Pneumatisches Ventil (10) nach einem der vorhergehenden Ansprüche, wobei das magnetische Betätigungselement (44) kugelförmig oder zylindrisch ist.

4. Pneumatisches Ventil (10) nach einem der vorhergehenden Ansprüche, wobei die erste Position um 180 Grad von der zweiten Position versetzt ist.

5. Pneumatisches Ventil (10) nach einem der vorhergehenden Ansprüche, wobei das erste Ventilelement (50a) einen Abstandshalter (42) einschließt, der zwischen dem ersten Magneten (52) und dem magnetischen Betätigungselement (44) positioniert ist, und das zweite Ventilelement (50b) einen Abstandshalter (42) einschließt, der zwischen dem zweiten Magneten (52) und dem magnetischen Betätigungselement (44) positioniert ist.

6. Pneumatisches Ventil (10) nach einem der vorhergehenden Ansprüche, wobei ein erstes Ende (54) von jedem der ersten und zweiten Magnete (52) von dem Betätigungselement (44) wegführend weist und eine erste magnetische Polarität aufweist und ein zweites Ende (58) von jedem der ersten und zweiten Magnete (52) zu dem Betätigungselement (44) hinführend weist und eine zweite magnetische Polarität aufweist, die der ersten magnetischen Polarität entgegengesetzt ist.

7. Pneumatisches Ventil (10) nach Anspruch 6, wobei die erste magnetische Polarität Norden ist und die zweite magnetische Polarität Süden ist.

8. Pneumatisches Ventil (10) nach Anspruch 6 oder 7, wobei ein erster Magnetpol des Betätigungselements (44) die gleiche magnetische Polarität wie das erste Ende von jedem der ersten und zweiten Magnete (52) aufweist und ein zweiter Magnetpol des Betätigungselements (44) die gleiche magnetische Polarität wie das zweite Ende von jedem der ersten und zweiten Magnete (52) aufweist.

9. Pneumatisches Ventil (10) nach einem der vorhergehenden Ansprüche, wobei die erste Öffnung (30) und die dritte Öffnung (38) koaxial sind.

10. Pneumatisches Ventil (10) nach einem der vorhergehenden Ansprüche, wobei sich die erste Öffnung (30) von einer ersten Endwand (18) des Gehäuses (14) erstreckt und die dritte Öffnung (38) von einer zweiten Endwand (22) des Gehäuses (14) erstreckt.

11. Pneumatisches Ventil (10) nach einem der vorhergehenden Ansprüche, wobei sich die zweite Öffnung (34) von einer Seitenwand (26) des Gehäuses (14) erstreckt.

12. Pneumatisches Ventil (10) nach einem der vorhergehenden Ansprüche, wobei die erste Öffnung (30) eine Drucköffnung ist, die mit einer Quelle für unter Druck stehendes Fluid gekoppelt ist, und die dritte Öffnung (38) ein Entlüftungsöffnung ist, die in Fluidkommunikation mit einer das Gehäuse (14) umgebenden Umgebung steht.

13. Pneumatisches Ventil (10) nach einem der vorhergehenden Ansprüche, wobei die zweite Öffnung (34) so konfiguriert ist, dass sie fluidisch mit einem Behälter zum Aufnehmen von unter Druck stehendem Fluid gekoppelt ist.

14. Pneumatisches Ventil (10) nach einem der vorhergehenden Ansprüche, wobei das Betätigungselement (44) so konfiguriert ist, dass, wenn sich das Betätigungselement (44) zwischen der ersten Position und der zweiten Position dreht, sich das Betätigungselement (44) von dem ersten und zweiten Magneten (52) in einer Scherbewegung trennt.

## Revendications

1. Vanne pneumatique (10) comprenant :
un boîtier (14) comprenant un premier orifice (30), un deuxième orifice (34) et un troisième orifice (38), dans lequel le premier orifice (30), le deuxième orifice (34) et le troisième orifice (38) sont en communication fluidique avec une chambre (24) située à l'intérieur du boîtier (14) ;
un premier élément de vanne (50a) situé dans la chambre (24) et comprenant un premier aimant (52), dans lequel le premier élément de vanne (50a) est mobile entre une position ouverte et une position fermée, et le premier élément de vanne (50a) est configuré pour sceller le premier orifice (30) dans la position fermée ;
un second élément de vanne (50b) situé dans la chambre (24) et comprenant un second aimant (52), dans lequel le second élément de vanne (50b) est mobile entre une position ouverte et une position fermée, et le second élément de vanne (50b) est configuré pour sceller le troisième orifice (38) dans la position fermée ; et
un élément d'actionnement magnétique (44) situé dans la chambre (24) entre le premier élément de vanne (50a) et le second élément de vanne (50b) et pouvant tourner entre une première et une seconde position,
le premier élément de vanne (50a) et le second élément de vanne (50b) sont mobiles entre la position ouverte et la position fermée en réponse à la rotation de l'élément d'actionnement magnétique (44) entre la première et la seconde position,
dans laquelle
l'élément d'actionnement magnétique (44) est configuré pour attirer le premier élément de vanne (50a) vers la position ouverte et pour repousser le second élément de vanne (50b) vers la position fermée dans la première position de l'élément d'actionnement magnétique (44), et l'élément d'actionnement magnétique (44) est configuré pour repousser le premier élément de vanne (50a) vers la position fermée et pour attirer le second élément de vanne (50b) vers la position ouverte dans la seconde position de l'élément d'actionnement magnétique (44) de sorte que, lorsque le premier élément de vanne (50a) est en position ouverte, le second élément de vanne (50b) est maintenu en position fermée et, lorsque le second élément de vanne (50b) est en position ouverte, le premier élément de vanne (50a) est maintenu en position fermée.

2. Vanne pneumatique (10) selon la revendication 1, comprenant en outre une bobine (17) couplée au boîtier (14), dans laquelle l'élément d'actionnement magnétique (44) est configuré pour tourner dans la première position en réponse à un courant étant entraîné à travers la bobine (17) dans une première direction, et dans laquelle l'élément d'actionnement magnétique (44) est configuré pour tourner dans la seconde position en réponse à un courant étant entraîné à travers la bobine (17) dans une seconde direction opposée à la première direction.

3. Vanne pneumatique (10) selon l'une quelconque des revendications précédentes, dans laquelle l'élément d'actionnement magnétique (44) est sphérique ou cylindrique.

4. Vanne pneumatique (10) selon l'une quelconque des revendications précédentes, dans laquelle la première position est décalée de 180 degrés par rapport à la seconde position.

5. Vanne pneumatique (10) selon l'une quelconque des revendications précédentes, dans laquelle le premier élément de vanne (50a) comprend un espaceur (42) placé entre le premier aimant (52) et l'élément d'actionnement magnétique (44) et le second élément de vanne (50b) comprend un espaceur (42) placé entre le second aimant (52) et l'élément d'actionnement magnétique (44).

6. Vanne pneumatique (10) selon l'une quelconque des revendications précédentes, dans laquelle une première extrémité (54) de chacun des premier et second aimants (52) est orientée à l'opposé de l'élément d'actionnement (44) et présente une première polarité magnétique et une seconde extrémité (58) de chacun des premier et second aimants (52) est orientée vers l'élément d'actionnement (44) et présente une seconde polarité magnétique opposée à la première polarité magnétique.

7. Vanne pneumatique (10) selon la revendication 6, dans laquelle la première polarité magnétique est le nord et la seconde polarité magnétique est le sud.

8. Vanne pneumatique (10) selon la revendication 6 ou 7, dans laquelle un premier pôle magnétique de l'élément d'actionnement (44) a la même polarité magnétique que la première extrémité de chacun des premier et second aimants (52) et un second pôle magnétique de l'élément d'actionnement (44) a la même polarité magnétique que la seconde extrémité de chacun des premier et second aimants (52).

9. Vanne pneumatique (10) selon l'une quelconque des revendications précédentes, dans laquelle le premier orifice (30) et le troisième orifice (38) sont coaxiaux.

10. Vanne pneumatique (10) selon l'une quelconque des revendications précédentes, dans laquelle le premier orifice (30) s'étend à partir d'une première paroi d'extrémité (18) du boîtier (14) et le troisième orifice (38) s'étend à partir d'une seconde paroi d'extrémité (22) du boîtier (14).

11. Vanne pneumatique (10) selon l'une quelconque des revendications précédentes, dans laquelle le second orifice (34) s'étend à partir d'une paroi latérale (26) du boîtier (14).

12. Vanne pneumatique (10) selon l'une quelconque des revendications précédentes, dans laquelle le premier orifice (30) est un orifice de pression couplé fluidiquement à une source de fluide sous pression et le troisième orifice (38) est un orifice d'évent qui est en communication fluidique avec un environnement entourant le boîtier (14).

13. Vanne pneumatique (10) selon l'une quelconque des revendications précédentes, dans laquelle le second orifice (34) est configuré pour être couplé fluidiquement à un récipient contenant un fluide sous pression.

14. Vanne pneumatique (10) selon l'une quelconque des revendications précédentes, dans laquelle l'élément d'actionnement (44) est configuré de telle sorte que lorsque l'élément d'actionnement (44) tourne entre la première et la seconde position, l'élément d'actionnement (44) se sépare des premier et second aimants (52) dans un mouvement de cisaillement.
